# EUROPEAN PATENT APPLICATION

(11) **EP 4 001 837 A1**
(43) Date of publication of application: **25.05.2022**
(21) Application number: 20840997.9
(22) Date of filing: 02.07.2020
(51) Int. Cl.: G01C 3/06, G01S 7/483, G01S 17/10

(54) **MEASUREMENT DEVICE, MEASUREMENT METHOD, AND PROGRAM**

(30) Priority: 16.07.2019 JP 2019130867
(71) Applicant: Sony Semiconductor Solutions Corporation, Atsugi-shi Kanagawa 243-0014 (JP)
(72) Inventor: HIRANO, Hiroyuki, Atsugi-shi, Kanagawa 243-0014 (JP); AKUTAGAWA, Kazuki, Atsugi-shi, Kanagawa 243-0014 (JP); KUROIWA, Tatsuo, Atsugi-shi, Kanagawa 243-0014 (JP); TSUKUDA,Yasunori, Atsugi-shi, Kanagawa 243-0014 (JP); SAKIMURA, Noboru, Atsugi-shi, Kanagawa 243-0014 (JP)
(74) Representative: Müller Hoffmann & Partner
(86) International application number: PCT/JP2020/025981
(87) International publication number: WO 2021/010175

(57) **Abstract**

The present disclosure relates to a measurement device, a measurement method, and a program that enable measurement in a shorter time.

A signal for giving an instruction on emission timing to emit a pulse of laser light is generated in order to output the laser light having the number of pulse emissions of two or more times within a distance measurement range time of one time by setting, as the distance measurement range time, a width of a flight time in which light reciprocates between the measurement device and a distance measurement range representing a fixed distance width including a distance to be measured. Then, a count code indicating timing at which a pulse of reflected light that is the laser light reflected by the distance measurement target and returned is received is output according to the number of pulse emissions in the distance measurement range time of one time, and the distance to the distance measurement target is calculated according to the specific count code among a plurality of the count codes. The present technology can be applied to a measurement device that measures a distance.

## Description

### TECHNICAL FIELD

The present disclosure relates to a measurement device, a measurement method, and a program, and more particularly to a measurement device, a measurement method, and a program capable of performing measurement in a shorter time.

### BACKGROUND ART

Conventionally, in time of flight (TOF), which is a technique for measuring a distance using a flight time of light, a time from when pulsed laser light is output toward a distance measurement target until a pulse of reflected light, which is laser light reflected by the distance measurement target and returned, is received is measured. Then, a processing cycle of outputting the pulsed laser light is repeated, a histogram of measurement values measured in a plurality of the processing cycles is generated, and the distance to the distance measurement target is calculated on the basis of the measurement value indicating a peak of the histogram.

For example, Patent Document 1 discloses a laser measurement method of setting a scanning speed and a light emission cycle of pulsed light such that a measurement point is irradiated a plurality of times within a time during which the pulsed light passes through the measurement point, accumulating light reception signals obtained by performing the multiple irradiation a plurality of times, and executing distance measurement.

Furthermore, Patent Document 2 discloses a laser radar device in which timing of projecting pulsed light is set to be random in a distance measurement period corresponding to a preset distance measurement cycle.

### CITATION LIST

### PATENT DOCUMENT

Patent Document 1: Japanese Patent Application Laid-Open No. 2019-60644
Patent Document 2: Japanese Patent Application Laid-Open No. 2017-125682

### SUMMARY OF THE INVENTION

### PROBLEMS TO BE SOLVED BY THE INVENTION

For example, in the conventional TOF, the irradiation with the pulsed light is performed only once in the time corresponding to one distance measurement range. That is, in Patent Document 1 described above, the pulsed light is projected once per short cycle T1 corresponding to one distance measurement range, and in Patent Document 2 described above, the pulsed light is projected once per projection cycle Tm of the pulsed light corresponding to one distance measurement range.

By the way, it is required to perform measurement in a shorter time than the conventional TOF.

The present disclosure has been made in view of such a situation and is intended to enable measurement in a shorter time.

### SOLUTIONS TO PROBLEMS

A measurement device according to one aspect of the present disclosure includes an emission timing signal generation unit configured to generate a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured; a count code output unit configured to output a count code indicating timing at which a pulse of reflected light that is the laser light reflected by a distance measurement target and returned is received according to the number of emissions in the distance measurement range time of one time; and a distance calculation unit configured to calculate a distance to the distance measurement target according to the specific count code among a plurality of the count codes.

A measurement method or program according to one aspect of the present disclosure includes, by a measurement device, generating a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured; outputting a count code indicating timing at which a pulse of reflected light that is the laser light reflected by a distance measurement target and returned is received according to the number of emissions in the distance measurement range time of one time; and calculating a distance to the distance measurement target according to the specific count code among a plurality of the count codes.

In one aspect of the present disclosure, a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured is generated; a count code indicating timing at which a pulse of reflected light that is the laser light reflected by a distance measurement target and returned is received is output according to the number of emissions in the distance measurement range time of one time; and a distance to the distance measurement target is calculated according to the specific count code among a plurality of the count codes.

### BRIEF DESCRIPTION OF DRAWINGS

Fig. 1 is a block diagram illustrating a configuration example of a first embodiment of a measurement device to which the present technology is applied.
Fig. 2 is a diagram for describing an example of processing of emitting pulsed laser light at the number of emissions of two or more times in one distance measurement range time.
Fig. 3 is a diagram for describing filter processing using emission timing information.
Fig. 4 is a flowchart for describing a first processing example of distance measurement processing.
Fig. 5 is a flowchart for describing a second processing example of the distance measurement processing.
Fig. 6 is a diagram for describing filter processing when pulsed laser light is emitted in different emission interval patterns.
Fig. 7 is a diagram for describing an example in which pulses are emitted in different emission interval patterns.
Fig. 8 is a block diagram illustrating a configuration example of a second embodiment of a measurement device to which the present technology is applied.
Fig. 9 is a diagram for describing a calculation result.
Fig. 10 is a diagram for describing a histogram of calculation results.
Fig. 11 is a block diagram illustrating a configuration example of a third embodiment of a measurement device to which the present technology is applied.
Fig. 12 is a diagram for describing count codes output from a plurality of TDCs.
Fig. 13 is a diagram for describing a histogram of count codes output from a plurality of TDCs.
Fig. 14 is a diagram for describing a modification in which a plurality of light receiving elements is provided.
Fig. 15 is a diagram for describing a mask signal.
Fig. 16 is a diagram for describing an example of correcting distortion.
Fig. 17 is a diagram for describing an example of correcting distortion.
Fig. 18 is a block diagram illustrating a configuration example of an embodiment of a computer to which the present technology is applied.
Fig. 19 is a block diagram illustrating an example of a schematic configuration of a vehicle control system.
Fig. 20 is an explanatory diagram illustrating an example of installation positions of a vehicle exterior information detection unit and an imaging unit.

### MODE FOR CARRYING OUT THE INVENTION

Hereinafter, specific embodiments to which the present technology is applied will be described in detail with reference to the drawings.

### <First Configuration Example of Measurement Device>

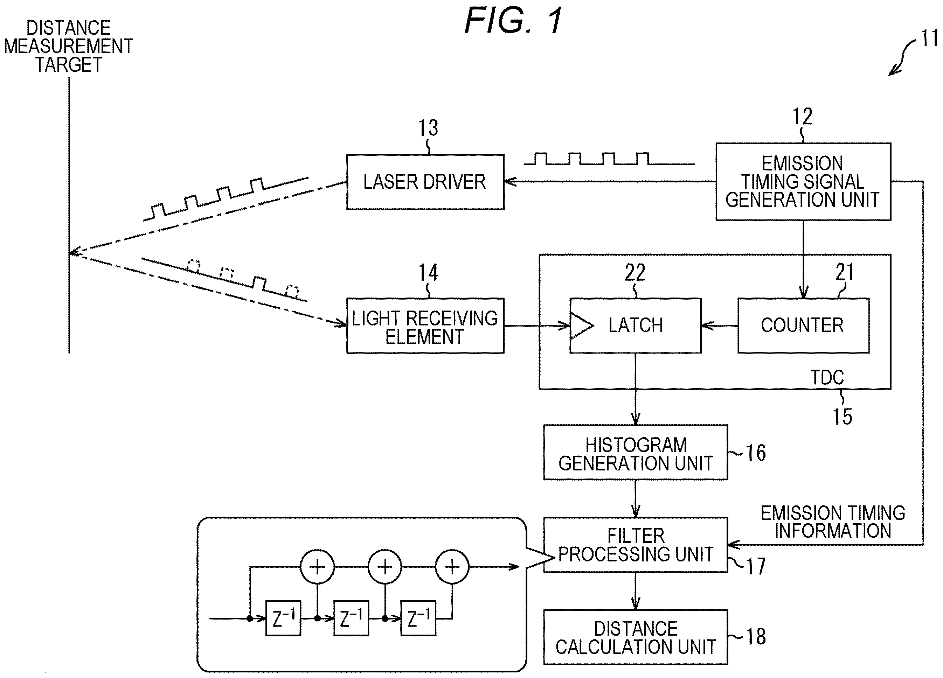

Fig. 1 is a block diagram illustrating a configuration example of a first embodiment of a measurement device to which the present technology is applied.

For example, a measurement device 11 illustrated in Fig. 1 measures a distance to a distance measurement target by measuring a time from when pulsed laser light is output toward the distance measurement target until a pulse of reflected light, which is laser light reflected by the distance measurement target and returned, is received. Note that Fig. 1 illustrates that, even if four pulses of laser light is output toward the distance measurement target, in a case where the distance to the distance measurement target is long, three pulses indicated by the broken line do not return and one pulse returns as the reflected light.

As illustrated in Fig. 1, the measurement device 11 includes an emission timing signal generation unit 12, a laser driver 13, a light receiving element 14, a TDC 15, a histogram generation unit 16, a filter processing unit 17, and a distance calculation unit 18. Furthermore, the TDC 15 includes a counter 21 and a latch 22.

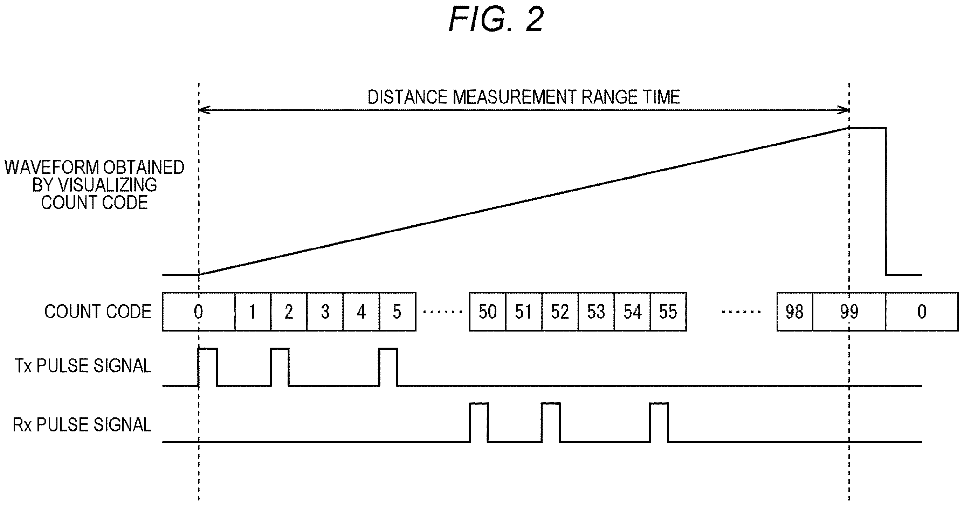

The emission timing signal generation unit 12 generates a Tx pulse signal for giving an instruction on emission timing to emit a pulse by laser light output from the measurement device 11, and supplies the Tx pulse signal to the laser driver 13. For example, as will be described below with reference to Fig. 2, the emission timing signal generation unit 12 generates the Tx pulse signal for giving an instruction on output of laser light having the number of pulse emissions of two or more times in one distance measurement range time that is a width of a flight time in which light reciprocates between the measurement device 11 and a distance measurement range representing a fixed distance width including a distance to be measured. Then, the emission timing signal generation unit 12 repeatedly performs the output of the pulsed laser light in one distance measurement range time according to a predetermined number of outputs.

Furthermore, the emission timing signal generation unit 12 supplies a count start signal for giving an instruction on the start of counting up in the one distance measurement range time to the counter 21 of the TDC 15. Moreover, the emission timing signal generation unit 12 supplies emission timing information indicating the emission timing of emitting a pulse in one distance measurement range time to the filter processing unit 17.

The laser driver 13 drives a laser light emitting element (not illustrated) according to the Tx pulse signal supplied from the emission timing signal generation unit 12, and outputs the pulsed laser light on the basis of the emission timing.

The light receiving element 14 is, for example, a single photon avalanche diode (SPAD), receives reflected light of the pulsed laser light reflected by the distance measurement target and returned, and supplies an Rx pulse signal indicating a waveform of the reflected light to the latch 22 of the TDC 15.

The time-to-digital conversion (TDC) 15 converts the time until the laser light output from the measurement device 11 is reflected by the distance measurement target and returned into a digital value. That is, the counter 21 starts counting up of count codes according to a count start signal supplied from the emission timing signal generation unit 12, and the latch 22 outputs the count code at the timing of the pulse indicated by the Rx pulse signal supplied from the light receiving element 14.

The histogram generation unit 16 acquires the count code output from the latch 22 of the TDC 15, generates a histogram, and supplies the histogram to the filter processing unit 17. For example, in the measurement device 11, the output of the pulsed laser light in one distance measurement range time is repeatedly performed according to a predetermined number of outputs, and the histogram generation unit 16 generates the histogram of the count code acquired each time the output of the pulsed laser light is repeated.

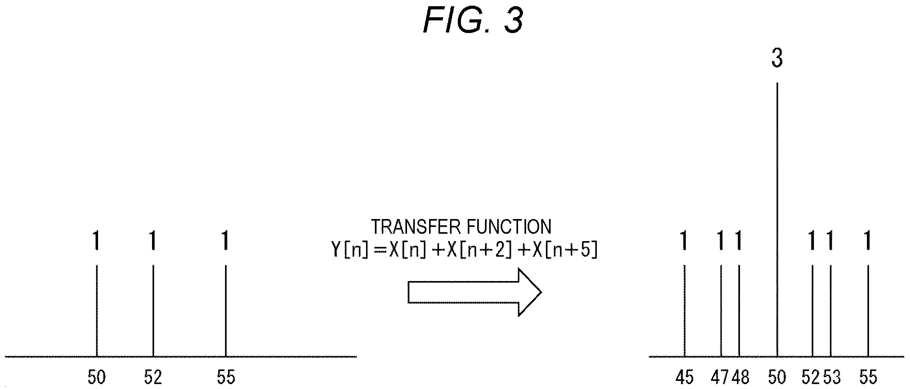

As will be described later with reference to Fig. 3, the filter processing unit 17 applies filter processing to the histogram supplied from the histogram generation unit 16 according to a transfer function obtained from the emission timing information supplied from the emission timing signal generation unit 12. For example, as the emission timing information, the count code at the emission timing at which the pulse is emitted according to the Tx pulse signal is used. Here, the transfer function used for the filter processing by the filter processing unit 17 may be determined by machine learning, for example.

The distance calculation unit 18 calculates the distance to the distance measurement target on the basis of the speed of light using the count code indicating a peak in the histogram to which the filter processing has been applied by the filter processing unit 17.

The processing performed in the measurement device 11 will be further described with reference to Figs. 2 and 3.

Fig. 2 illustrates the count code counted by the counter 21, a waveform obtained by visualizing the count code, the Tx pulse signal indicating the timing of the pulse in the pulsed laser light, and the Rx pulse signal indicating the timing of the pulse in reflected light.

Furthermore, in the example illustrated in Fig. 2, the time for one count by the counter 21 is set to lOOp seconds, and a measurable distance measurement range in the measurement device 11 is set to 1.5 m. Therefore, in the case where the distance measurement range is 1.5 m, one distance measurement range time, which is the time required for one measurement of the distance to the distance measurement target, is 10n seconds required for light to reciprocate the distance of 1.5 m. Furthermore, resolution of the distance measurement by the measurement device 11 is 1.5 cm, which is the distance at which light reciprocates in lOOp seconds, which is a time corresponding to one count by the counter 21.

Then, the measurement device 11 outputs the laser light having the number of pulse emissions of two or more times in one distance measurement range time. That is, the interval of each pulse of the laser light is set to be shorter than the one distance measurement range time. Therefore, the measurement device 11 emits the next pulse at timing earlier than the time until the pulse emitted at immediately preceding timing among the plurality of pulses emitted within the one distance measurement range time is reflected by the distance measurement target, returned, and received.

For example, the Tx pulse signal illustrated in Fig. 2 indicates that the laser light having the number of pulse emissions of three times is output in the one distance measurement range time, and the pulse is emitted at the timing of count code 0, count code 2, and count code 5. Furthermore, the Rx pulse signal illustrated in Fig. 2 indicates that the reflected light having the waveform indicating pulses at the timing of count code 50, count code 52, and count code 55 is received by the light receiving element 14. For example, the next pulse is emitted at the count code 2 earlier than the time until the pulse emitted at the count code 0 is received at the count code 50. Similarly, the next pulse is emitted at the count code 5 earlier than the time until the pulse emitted at the count code 2 is received at the count code 52.

Here, the one distance measurement range time is an operation cycle of the measurement device 11, and is set according to maximum time or distance measured by the measurement device 11. For example, the one distance measurement range time is a time corresponding to a width of a distance measurement distance supported by a certain operation mode of the measurement device 11. Specifically, in the case of "15 m-wide distance measurement mode", the one distance measurement range time becomes 100n seconds (15/3 × 10 to the power of 8 × 2). Furthermore, the distance measurement support distance in the "15 m distance measurement mode" may be, for example, 10 to 25 m or 15 to 30 m in addition to 0 to 15 m. Moreover, a minimum value of distance measurable distance is not necessarily 0 m.

Then, in the measurement device 11, the output of the pulsed laser light in one distance measurement range time is repeatedly performed according to a predetermined number of outputs, and the count code 50, the count code 52, and the count code 55 indicated by the Rx pulse signal are repeatedly acquired. Thereby, the histogram generated by the histogram generation unit 16 has peaks in the count code 50, the count code 52, and the count code 55 as illustrated on the left side of Fig. 3.

Furthermore, the filter processing unit 17 obtains the transfer function (Y[n] = X[n] + X[n + 2] + X[n + 5]) using the emission timing information supplied from the emission timing signal generation unit 12, that is, the count code 0, the count code 2, and the count code 5 indicated by the Tx pulse signal in the example illustrated in Fig. 2. Then, the filter processing unit 17 can acquire the histogram after the filter processing having the highest peak in the count code 50 corresponding to a true distance as illustrated on the right side of Fig. 3 by applying the filter processing according to the transfer function to the histogram supplied from the histogram generation unit 16.

The measurement device 11 configured as described above can specify the count code corresponding to the true distance by applying the filter processing using the emission timing information of the pulses even when outputting the laser light having the number of pulse emissions of two or more times in the one distance measurement range time. Thereby, the measurement device 11 can double the height of the count code corresponding to the true distance according to the number of pulse emissions, and can generate the histogram in which the count code shows the peak in a shorter time. Therefore, the measurement device 11 can measure the distance to the distance measurement target in a shorter time than before.

### <Processing Example of Measurement Processing>

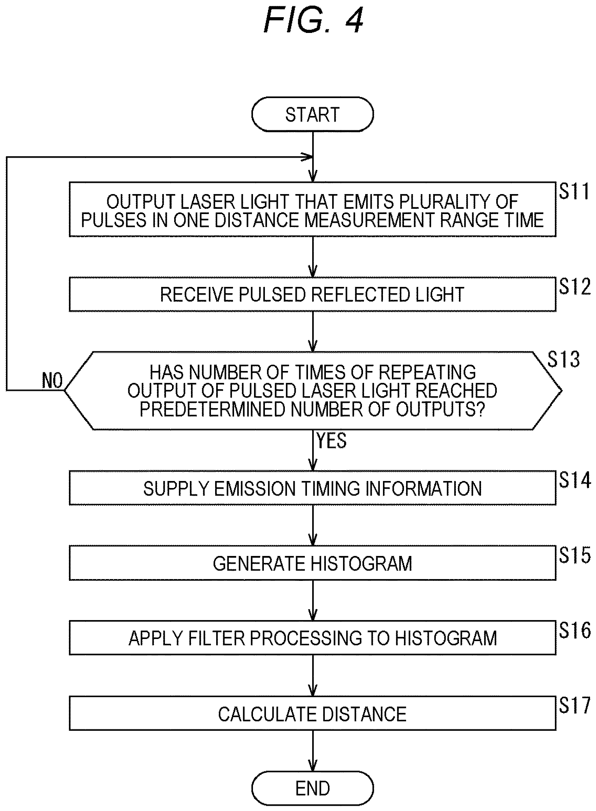

A first processing example of distance measurement processing executed in the measurement device 11 will be described with reference to the flowchart illustrated in Fig. 4.

For example, when control is performed to start the distance measurement processing, the first distance measurement range time is started, and in step S11, the emission timing signal generation unit 12 supplies the count start signal for giving an instruction on the start of counting up in the one distance measurement range time to the counter 21. Then, the emission timing signal generation unit 12 supplies the Tx pulse signal giving an instruction on the output of the laser light having the number of pulse emissions of two or more times in the one distance measurement range time to the laser driver 13. Thereby, the laser driver 13 drives a laser light emitting element (not illustrated) to output the laser light that emits a plurality of pulses in the one distance measurement range time on the basis of the emission timing indicated by the Tx pulse signal.

In step S12, the light receiving element 14 receives the reflected light of the pulsed laser light output in step S11, and supplies the Rx pulse signal indicating the waveform of the reflected light to the latch 22. Thereby, the latch 22 fetches, from the counter 21, the counter code at the timing of the pulse indicated by the Rx pulse signal supplied from the light receiving element 14, and supplies the counter code to the histogram generation unit 16.

Then, when the counter 21 finishes the counting for one distance measurement range (the count code 99 in the example of Fig. 2) from the timing when the one distance measurement range time is started in step S11, the processing proceeds to step S13.

In step S13, the emission timing signal generation unit 12 determines whether or not the number of times of repeating the output of the pulsed laser light in the one distance measurement range time has reached a predetermined number of outputs.

In step S13, in a case where the emission timing signal generation unit 12 determines that the number of times of repeating the output of the pulsed laser light in the one distance measurement range time has not reached the predetermined number of outputs, that is, in a case where the number of times is less than the predetermined number of outputs, the processing returns to step S11. Then, the second and subsequent distance measurement range times are repeatedly performed in a similar manner.

Meanwhile, in step S13, in a case where the emission timing signal generation unit 12 determines that the number of times of repeating the output of the pulsed laser light in the one distance measurement range time has reached the predetermined number of outputs, the processing proceeds to step S14.

In step S14, the emission timing signal generation unit 12 supplies, to the filter processing unit 17, the emission timing information indicating the emission timing according to the pulse indicated by the Tx pulse signal supplied to the laser driver 13 in step S11.

In step S15, the histogram generation unit 16 generates the histogram of the count code supplied from the latch 22 in step S12 repeated the predetermined number of outputs, and supplies the histogram to the filter processing unit 17.

In step S16, the filter processing unit 17 obtains the transfer function using the counter code of the emission timing information supplied from the emission timing signal generation unit 12 in step S14. Then, the filter processing unit 17 applies the filter processing according to the transfer function to the histogram supplied from the histogram generation unit 16 in step S15. Thereby, the filter processing unit 17 specifies the count code indicating the highest peak in the histogram to which the filter processing has been applied, and notifies the distance calculation unit 18 of the count code.

In step S17, the distance calculation unit 18 calculates the distance to the distance measurement target using the count code supplied from the filter processing unit 17 in step S16, and then terminates the processing.

By the measurement processing as described above, the measurement device 11 can measure the distance to the distance measurement target in a shorter time.

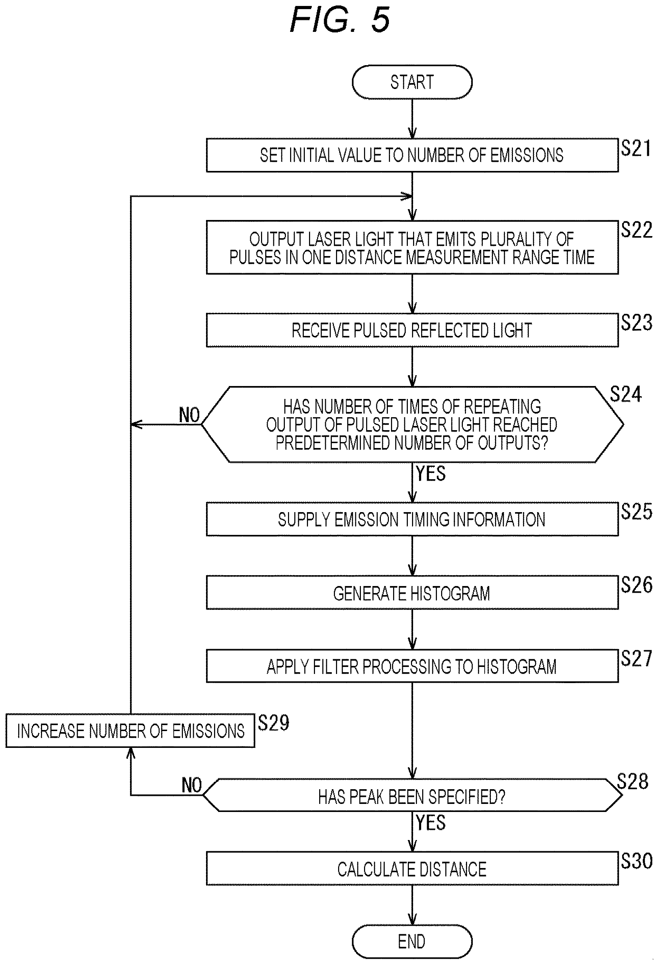

A second processing example of the distance measurement processing executed in the measurement device 11 will be described with reference to the flowchart illustrated in Fig. 5.

In step S21, the emission timing signal generation unit 12 sets an initial value (for example, 1) of the number of emissions of emitting the a pulse in the one distance measurement range time.

In steps S22 to S27, processing similar to that in steps S11 to S16 in Fig. 4 is performed. Thereafter, in step S28, the filter processing unit 17 determines whether or not the count code indicating the highest peak has been specified in the histogram to which the filter processing has been applied in step S27.

In step S28, in a case where the filter processing unit 17 determines that the count code indicating the highest peak has not been specified, the processing proceeds to step S29. In step S29, the emission timing signal generation unit 12 adds 1 to the number of emissions at the present time to increase the number of emissions, and then the processing returns to step S22 and similar processing is repeatedly performed thereafter.

Meanwhile, in step S28, in a case where the filter processing unit 17 determines that the count code indicating the highest peak has been specified, the processing proceeds to step S30. In step S30, processing similar to that in step S17 in Fig. 4 is performed, and after the distance calculation unit 18 calculates the distance to the distance measurement target, the processing is terminated.

By the above measurement processing, the measurement device 11 dynamically changes the number of emissions of emitting the pulse in the one distance measurement range time, and increases the number of emissions in the case where the peak cannot be obtained with a small number of emissions. In this manner, the measurement device 11 can appropriately measure the distance according to the distance to the distance measurement target by, for example, increasing the number of pulse emissions according to the peak of the histogram.

Note that the measurement device 11 may output the laser light having a different emission interval pattern for each one distance measurement range time, for example, in addition to repeatedly outputting the laser light having the same pulse emission interval pattern (hereinafter referred to as an emission interval pattern) for each one distance measurement range time.

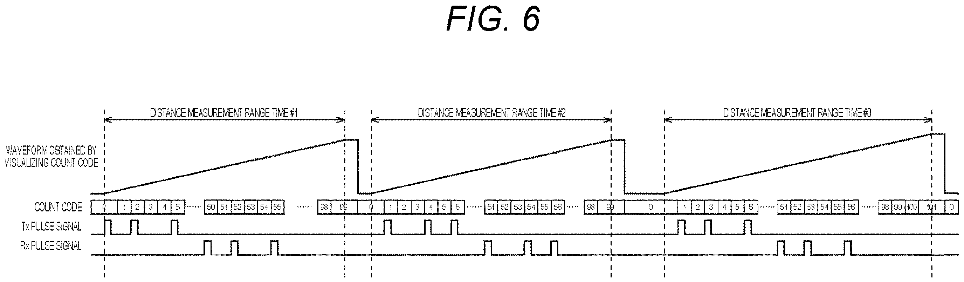

For example, the Tx pulse signal illustrated in Fig. 6 indicates that the pulse is emitted in the emission interval pattern of the count code 0, the count code 2, and the count code 5 in the distance measurement range time #1. Furthermore, in the distance measurement range time #2, the pulse is emitted in the emission interval pattern of the count code 1, the count code 4, and the count code 6. Furthermore, in the distance measurement range time #3, the pulse is emitted in the emission interval pattern of the count code 1, the count code 3, and the count code 6.

As described above, the measurement device 11 can specify the count code corresponding to the true distance by applying the filter processing using the emission timing information of the pulses even when outputting the laser light having a different emission interval pattern for each one distance measurement range time. Note that, as illustrated in Fig. 6, the same emission interval pattern may be repeated a plurality of times (1000 times for every three patterns as illustrated) for each different emission interval pattern to generate a histogram for each emission interval pattern, in addition to changing the emission interval pattern for each one distance measurement range time, for example.

Moreover, the measurement device 11 can measure the distance to the distance measurement target even if the interval for each distance measurement range time, that is, the time from the end of the distance measurement range time to the start of the next distance measurement range time is changed. Furthermore, the measurement device 11 can measure the distance to the distance measurement target even if the maximum value of the count code counted by the counter 21 is changed for each distance measurement range time.

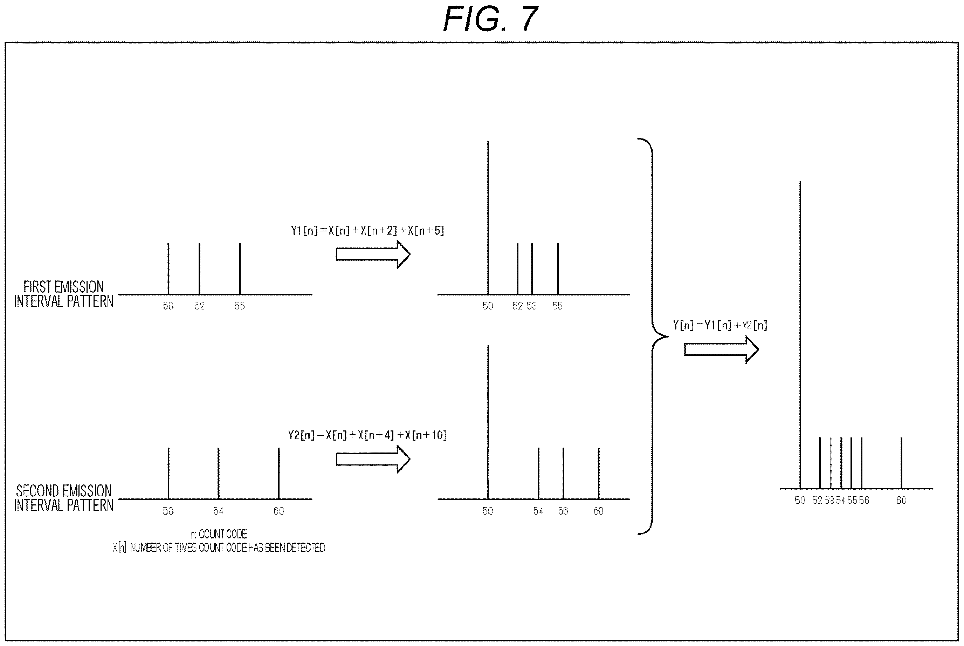

Furthermore, as illustrated in Fig. 7, in the measurement device 11, in a case where the pulse is emitted in a different emission interval pattern, a transfer function using each emission timing is used. As illustrated in Fig. 7, by dynamically changing the transfer function using the emission timing in the emission interval pattern, undesired peak components can be made smaller.

For example, Fig. 7 illustrates an example in which false peak components can be reduced to 1/6 of true peak components by switching a first emission interval pattern and a second emission interval pattern with an equal probability, applying the filter processing using the transfer functions using the respective emission timings, and then merging the histograms. By effectively suppressing the false peak components by such a method, the false peak components are set to 1/10 or less of the true peak components in probability statistics-based calculation, so that the false peak components can be made negligible.

Note that a ripple counter is shared for the unmerged histograms, and the merged histogram is held in a memory (for example, a static random access memory (SRAM)), and a change frequency of the transfer functions is set to a range not affecting a frame rate. Then, an increase in a circuit area of the histogram generation unit 16 can be suppressed by a method of performing merge processing and SRAM update at the same timing as the change in the transfer function.

Here, the intervals between pulses emitted at two or more times of emission in the one distance measurement range time may be equal or non-equal. Moreover, the emission timing signal generation unit 12 may change the interval between pulses for each one distance measurement range time. For example, the interval between pulses is changed on the basis of a predetermined random number, specifically, using a true pseudorandom number generator or a pseudorandom number generator including a cryptographically secure one.

### <Second Configuration Example of Measurement Device>

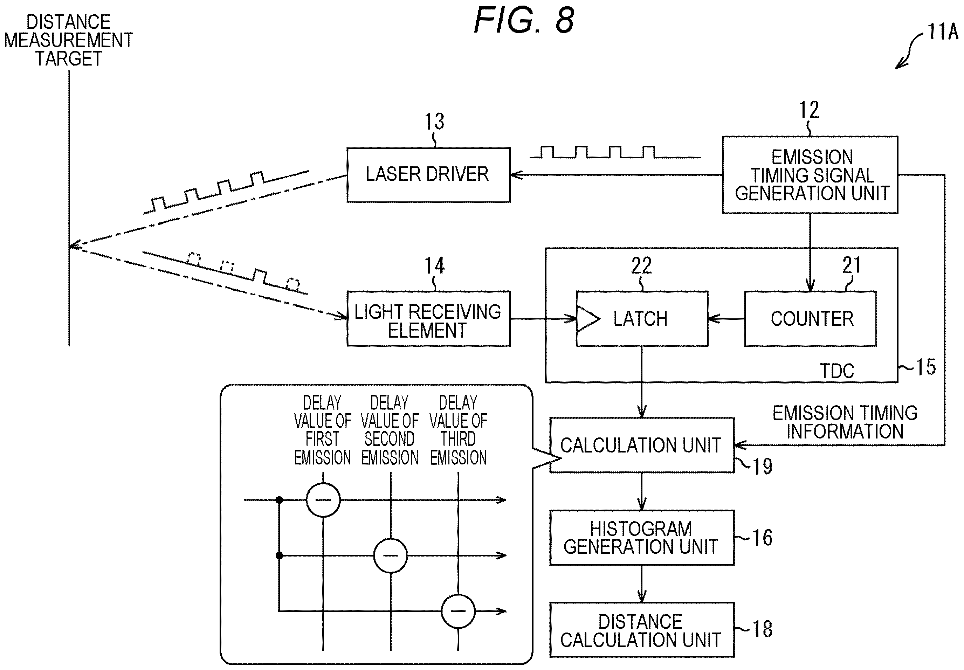

Fig. 8 is a block diagram illustrating a configuration example of a second embodiment of a measurement device to which the present technology is applied. Note that, in a measurement device 11A illustrated in Fig. 8, configurations common to the measurement device 11 in Fig. 1 are given the same reference numerals and detailed description of the configurations is omitted.

That is, the measurement device 11A has a configuration common to the measurement device 11 in Fig. 1 in including an emission timing signal generation unit 12, a laser driver 13, a light receiving element 14, a TDC 15, a histogram generation unit 16, and a distance calculation unit 18.

Then, the measurement device 11A is different from the measurement device 11 in Fig. 1 in including a calculation unit 19 between the TDC 15 and the histogram generation unit 16, and in that emission timing information is supplied from the emission timing signal generation unit 12 to the calculation unit 19.

The calculation unit 19 acquires a count code output from a latch 22 of the TDC 15, and supplies a calculation result obtained by performing calculation using emission timing information supplied from the emission timing signal generation unit 12 to the histogram generation unit 16. For example, the calculation unit 19 performs calculation to obtain, for each count code at which pulses of reflected light are detected, calculation results obtained by subtracting emission timings of all of pulses emitted in one distance measurement range time from the count code.

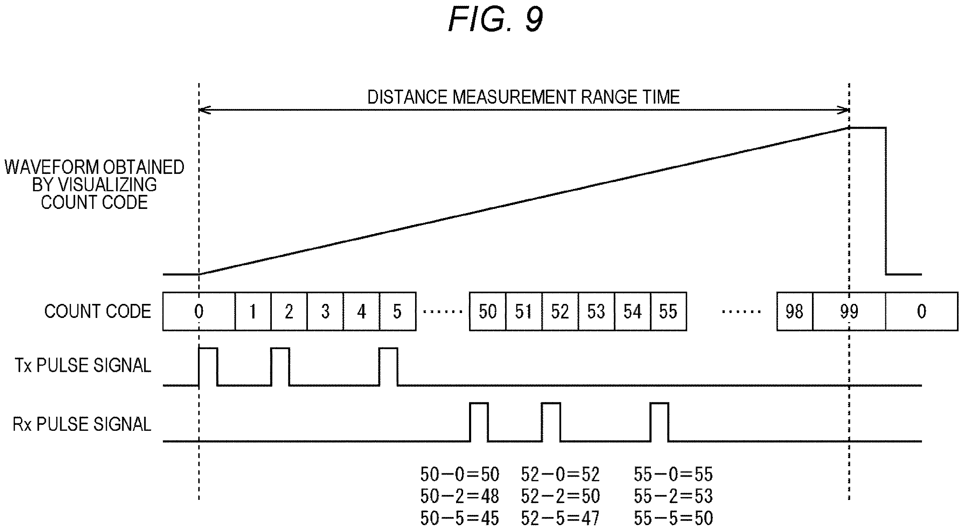

For example, in the example illustrated in Fig. 9, calculation results (50, 48, 45) obtained by subtracting the emission timings (0, 2, 5) of all the pulses from the count code 50 at which the pulses of the reflected light are detected are obtained. Similarly, calculation results (52, 50, 47) obtained by subtracting the emission timings (0, 2, 5) of all the pulses from the count code 52 at which the pulses of the reflected light are detected are obtained. Furthermore, calculation results (55, 53, 50) obtained by subtracting the emission timings (0, 2, 5) of all the pulses from the count code 55 at which the pulses of the reflected light are detected are obtained.

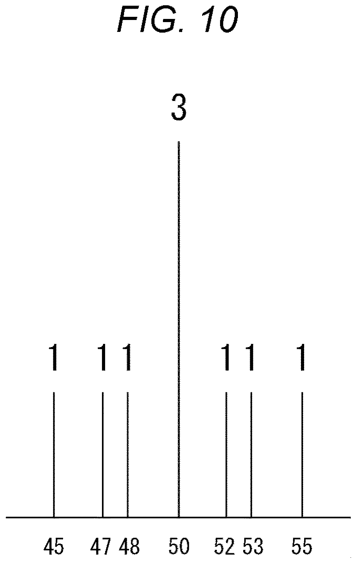

Then, the histogram generation unit 16 generates a histogram of the calculation result supplied from the calculation unit 19. For example, in a case where the calculation result as illustrated in Fig. 9 is obtained, a histogram indicating a peak in a calculation result 50 is generated as illustrated in Fig. 10. That is, in the histogram illustrated in Fig. 10, since the number of pulse emissions is three times in the one distance measurement range time, the calculation result 50 indicating the peak is three times higher than the other calculation results. Note that, as described with reference to Fig. 7, the calculation results other than calculation result indicating the peak can be further reduced by outputting the laser light having a different emission interval pattern for each one distance measurement range time and merging the histograms.

The measurement device 11A configured as described above can generate the histogram in which the count code shows the peak in a shorter time, and can measure a distance to a distance measurement target in a shorter time, similarly to the measurement device 11 in Fig. 1.

### <Third Configuration Example of Measurement Device>

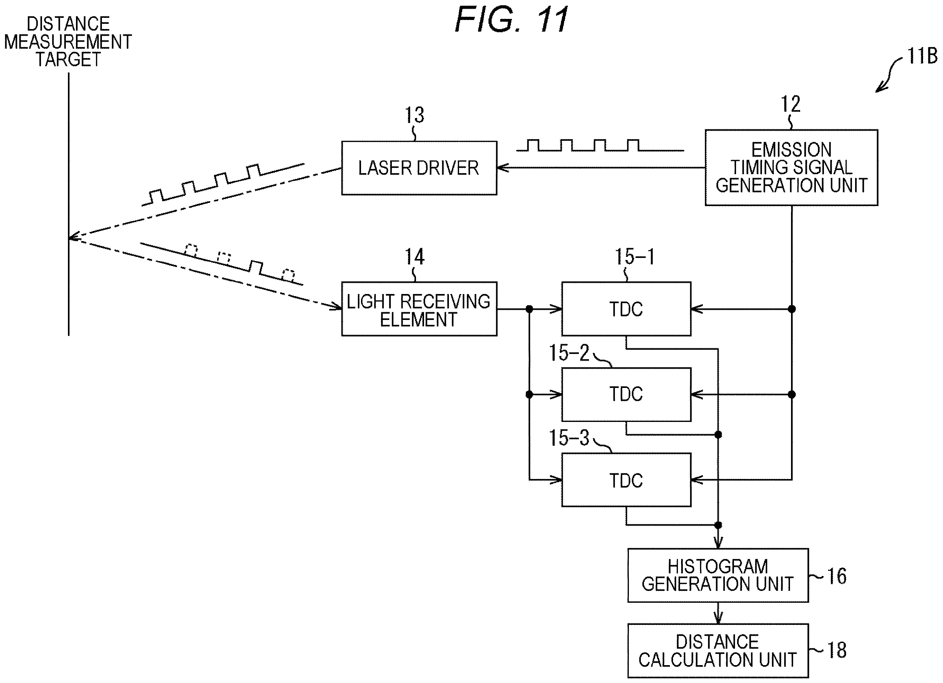

Fig. 11 is a block diagram illustrating a configuration example of a third embodiment of a measurement device to which the present technology is applied. Note that, in a measurement device 11B illustrated in Fig. 11, configurations common to the measurement device 11 in Fig. 1 are given the same reference numerals and detailed description of the configurations is omitted.

That is, the measurement device 11B has a configuration common to the measurement device 11 in Fig. 1 in including an emission timing signal generation unit 12, a laser driver 13, a light receiving element 14, a histogram generation unit 16, and a distance calculation unit 18. Note that, although not illustrated, each of TDCs 15-1 to 15-3 includes a counter 21 and a latch 22.

Then, the measurement device 11B is different from the measurement device 11 in Fig. 1 in including the three TDCs 15-1 to 15-3. Note that, in the configuration provided with a plurality of TDCs 15, as in the measurement device 11B, the number of TDCs 15, the number corresponding to the number of pulse emissions in one distance measurement range time, is provided, for example.

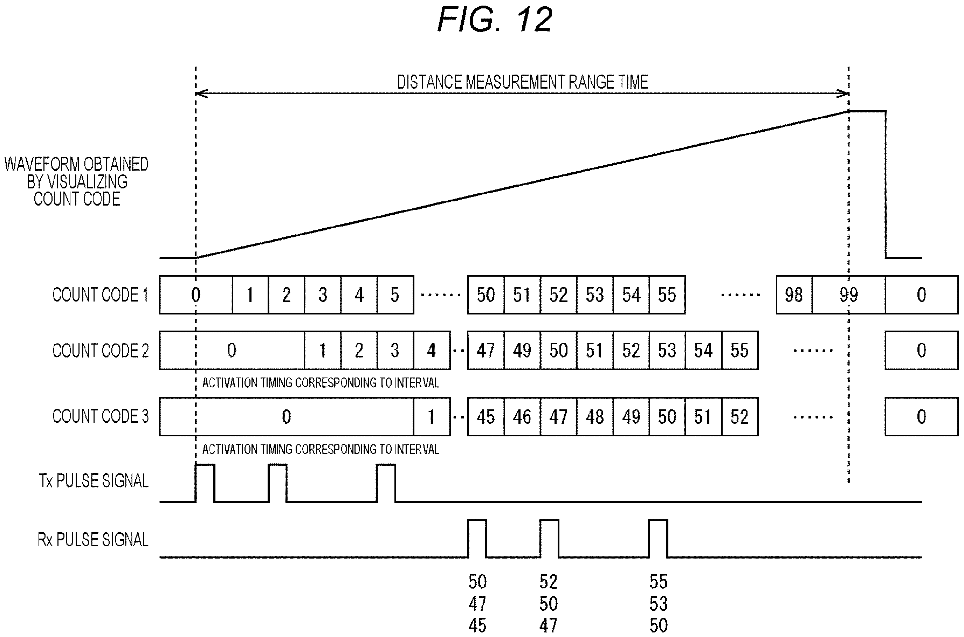

Then, each of the TDCs 15 starts counting a count code according to emission timing of a corresponding pulse. For example, in the example illustrated in Fig. 12, emission timing information indicates emission timing 0, emission timing 2, and emission timing 5, as indicated by a Tx pulse signal. Therefore, the TDC 15-1 starts counting the count code according to the emission timing 0, the TDC 15-2 starts counting the count code according to the emission timing 2, and the TDC 15-3 starts counting the count code according to the emission timing 5.

Therefore, the TDC 15-1 outputs count code 50, the TDC 15-2 outputs count code 47, and the TDC 15-3 outputs count code 45 at the timing when the light receiving element 14 receives the reflected light of the pulse emitted at the emission timing 0, reflected by a distance measurement target, and returned. Similarly, the TDC 15-1 outputs count code 52, the TDC 15-2 outputs the count code 50, and the TDC 15-3 outputs the count code 47 at the timing when the light receiving element 14 receives the reflected light of the pulse emitted at the emission timing 2, reflected by a distance measurement target, and returned. Furthermore, the TDC 15-1 outputs count code 55, the TDC 15-2 outputs count code 53, and the TDC 15-3 outputs the count code 50 at the timing when the light receiving element 14 receives the reflected light of the pulse emitted at the emission timing 5, reflected by a distance measurement target, and returned.

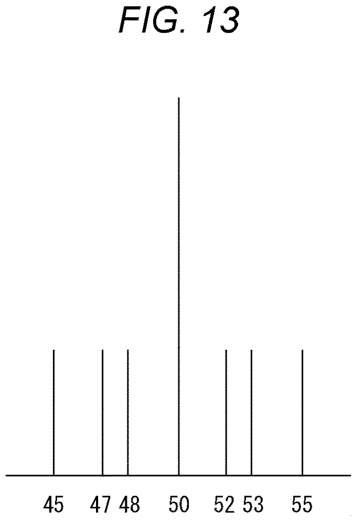

Then, in the measurement device 11B, the histogram generation unit 16 acquires all the count codes output from the TDCs 15-1 to 15-3 and generates a histogram. For example, in a case where the count codes as illustrated in Fig. 12 is obtained, a histogram indicating a peak in a calculation result 50 is generated as illustrated in Fig. 13. That is, in the histogram illustrated in Fig. 13, since the number of pulse emissions is three times in the one distance measurement range time, the calculation result 50 indicating the peak is three times higher than the other calculation results. Note that, as described with reference to Fig. 7, the calculation results other than calculation result indicating the peak can be further reduced by outputting the laser light having a different emission interval pattern for each one distance measurement range time and merging the histograms.

The measurement device 11B configured as described above can generate the histogram in which the count code shows the peak in a shorter time, and can measure a distance to a distance measurement target in a shorter time, similarly to the measurement device 11 in Fig. 1.

### <Modification of Measurement Device>

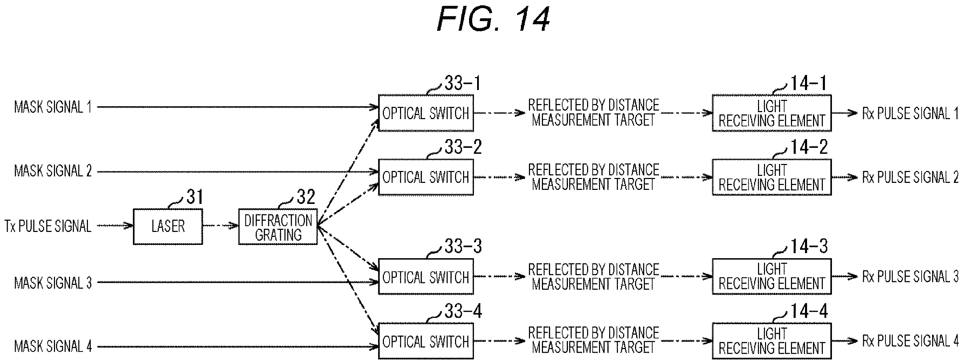

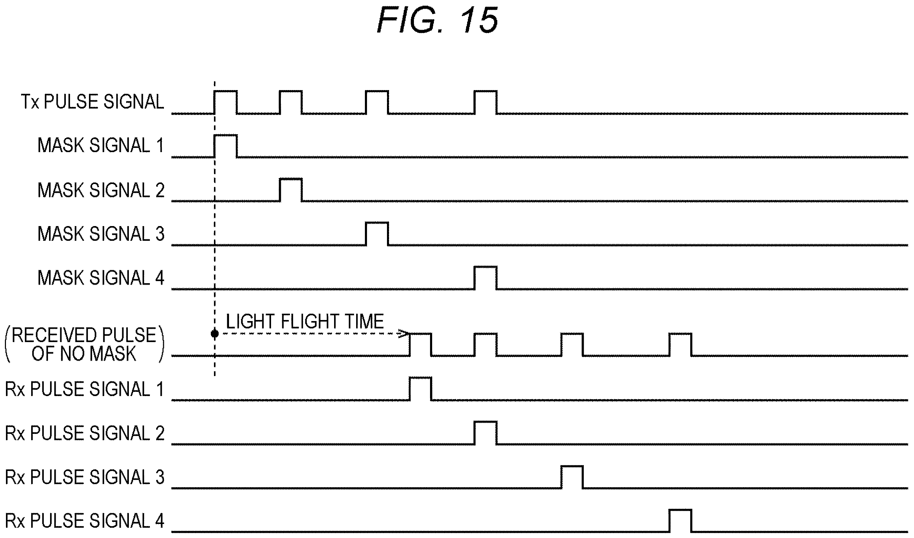

A modification of the measurement device 11 will be described with reference to Figs. 14 and 15.

For example, the measurement device 11 can be provided with the number of light receiving elements 14, the number corresponding to the number of pulse emissions in one distance measurement range time. The, these light receiving elements 14 can receive individual pulses.

Fig. 14 illustrates a modification of the measurement device 11 provided with four light receiving elements 14-1 to 14-4. Note that illustration of blocks other than the light receiving elements 14 provided in the measurement device 11 of Fig. 1 is omitted.

For example, the laser light output from a laser 31 driven according to the Tx pulse signal supplied from the laser driver 13 is diffracted toward four optical switches 33-1 to 33-4 by a diffraction grating 32. The optical switches 33-1 to 33-4 mask passing of pulses other than the corresponding pulses according to mask signals 1 to 4, respectively.

For example, as illustrated in Fig. 15, the optical switch 33-1 passes only the first pulse according to the mask signal 1, and the optical switch 33-2 passes only the second pulse according to the mask signal 2. Similarly, the optical switch 33-3 passes only the third pulse according to the mask signal 3, and the optical switch 33-4 passes only the fourth pulse according to the mask signal 4.

Then, the light receiving element 14-1 receives the reflected light of the first pulse having passed through the optical switch 33-1 and reflected by the distance measurement target, and outputs an Rx pulse signal 1 indicating the timing of receiving the pulse. Furthermore, the light receiving element 14-2 receives the reflected light of the second pulse having passed through the optical switch 33-2 and reflected by the distance measurement target, and outputs an Rx pulse signal 2 indicating the timing of receiving the pulse. Hereinafter, similarly, the light receiving element 14-3 outputs an Rx pulse signal 3, and the light receiving element 14-4 outputs an Rx pulse signal 4.

Thereafter, in the measurement device 11, the count codes at the timings according to the pulses indicated by the Rx pulse signals 1 to 4 are output from the latch 22, and processing similar to the above-described processing is performed.

As described above, the measurement device 11 can be configured such that the number of light receiving elements 14, the number corresponding to the number of pulse emissions in one distance measurement range time, detects individual pulses. Note that it is sufficient that the measurement device 11 is configured to have such a correspondence relationship, and may have a configuration in which the number of lasers 31, the number corresponding to the number of pulse emissions in one distance measurement range time, is provided, and each laser 31 emits an individual pulse, for example.

### <Correction of Distortion>

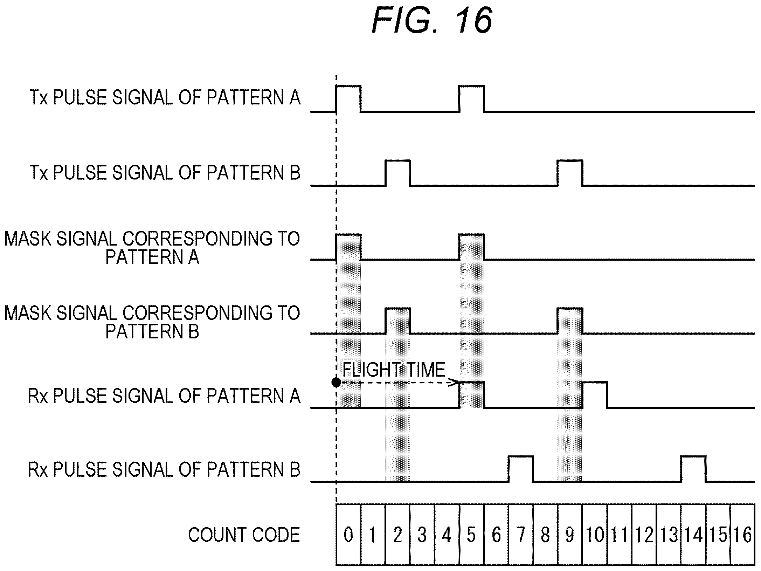

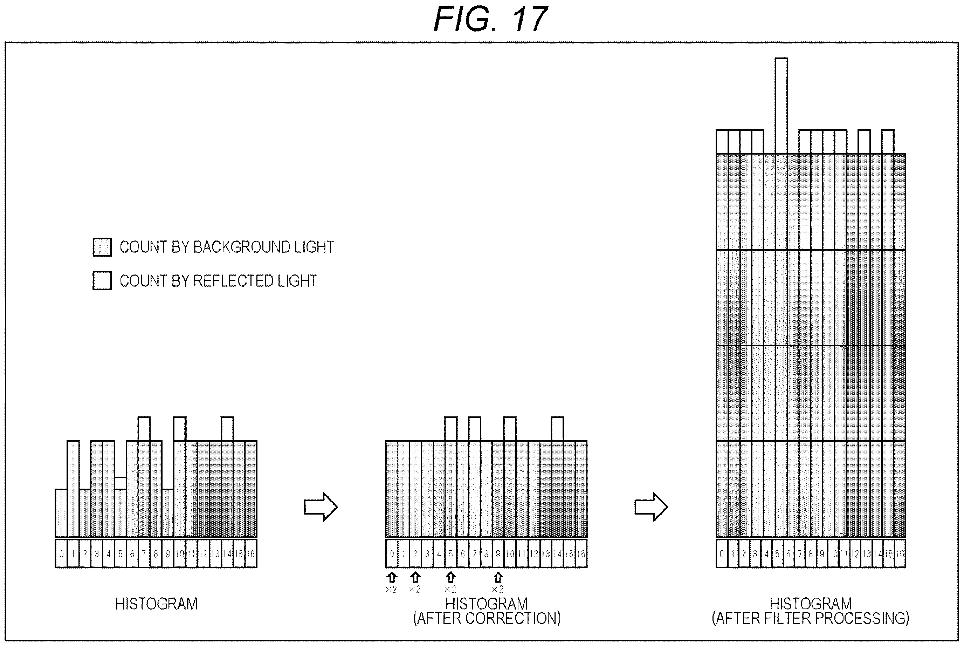

An example of correcting distortion in the measurement device 11 including a plurality of lasers and a plurality of light receiving elements will be described with reference to Figs. 16 and 17.

For example, to prevent a reaction of the light receiving element 14 due to stray light generated in a module incorporating the plurality of lasers 31 and the plurality of light receiving elements 14 at the moment of laser emission, it is possible to adopt an operation of disabling the light receiving element 14 at the timing of laser emission as illustrated in Fig. 16. However, in this case, it is predicted that components of the acquired histogram due to background light do not become flat with respect to all the count values and distortion occurs (for example, the components due to the background light decreases at disabled timing). Therefore, it is necessary to correct the distortion using the emission timing.

First, it is assumed that the frequency of pattern A and pattern B as illustrated in Fig. 16 is 50% each. Then, the timing at which the two light receiving elements 14 are masked, that is, the timing at which the light receiving elements are disabled by the mask signal can be recognized from the Tx pulse signals of the pattern A and the pattern B. Therefore, the count code of the histogram with weakened sensitivity can be predicted according to the timing. Furthermore, since a sensitivity reduction rate at that time can also be obtained by calculation, an inverse of the sensitivity reduction rate is obtained as a correction coefficient, and the count code with reduced sensitivity is multiplied by the correction coefficient, whereby a floor noise average can be equalized.

That is, in the example illustrated in Fig. 16, the sensitivity decreases in the count code 0, the count code 2, the count code 5, and the count code 9, and the histogram as illustrated on the left side of Fig. 17 is acquired. Then, since the frequency of the pattern A and the pattern B is each 50%, 2 is obtained as the correction coefficient, and as illustrated in the center of Fig. 17, the histogram with decreased sensitivity is multiplied by 2 to equalize the floor noise average. Thereafter, by applying the filter processing using the emission timing information by the filter processing unit 17, the histogram showing the peak can be obtained as illustrated on the right side of Fig. 17.

### <Configuration Example of Computer>

Next, the above-described series of processing (measurement method) can be executed by hardware or software. In a case of executing the series of processing by software, a program that configures the software is installed in a general-purpose computer or the like.

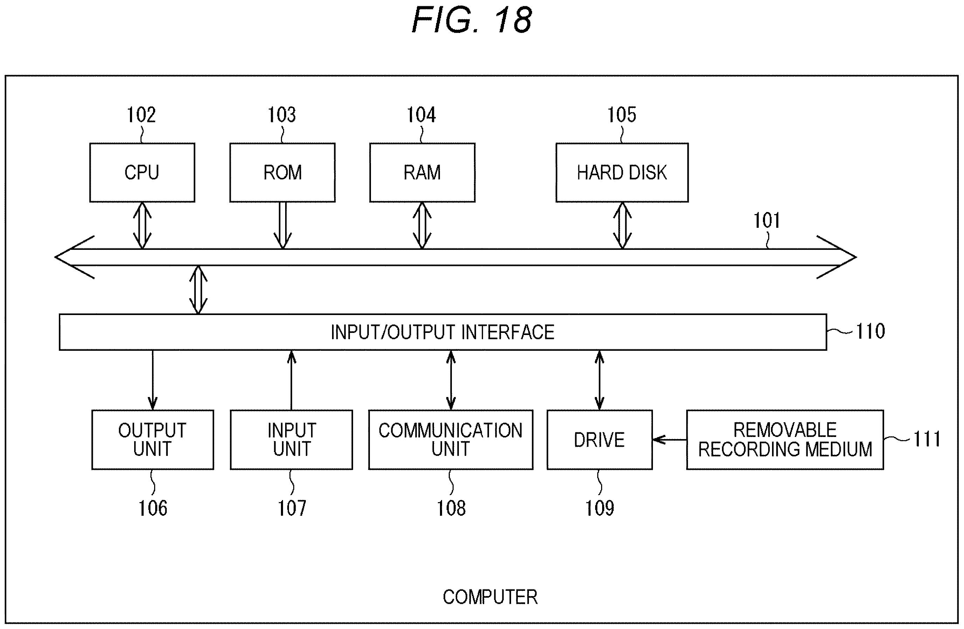

Fig. 18 is a block diagram illustrating a configuration example of an embodiment of a computer to which a program for executing the above-described series of processing is installed.

The program can be recorded in advance in a hard disk 105 or a ROM 103 as a recording medium built in the computer.

Alternatively, the program can be stored (recorded) in a removable recording medium 111 driven by a drive 109. Such a removable recording medium 111 can be provided as so-called package software. Here, examples of the removable recording medium 111 include a flexible disk, a compact disc read only memory (CD-ROM), a magneto optical (MO) disk, a digital versatile disc (DVD), a magnetic disk, a semiconductor memory, and the like.

Note that the program can be downloaded to the computer via a communication network or a broadcast network and installed in the built-in hard disk 105, in addition to the program being installed from the removable recording medium 111 to the computer, as described above. In other words, the program can be transferred in a wireless manner from a download site to the computer via an artificial satellite for digital satellite broadcasting, or transferred in a wired manner to the computer via a network such as a local area network (LAN) or the Internet, for example.

The computer incorporates a central processing unit (CPU) 102, and an input/output interface 110 is connected to the CPU 102 via a bus 101.

When a command is input through the input/output interface 110 by the user who operates an input unit 107 or the like, the CPU 102 executes the program stored in the read only memory (ROM) 103 according to the command. Alternatively, the CPU 102 loads the program stored in the hard disk 105 into a random access memory (RAM) 104 and executes the program.

As a result, the CPU 102 performs the above-described processing according to the flowchart or the above-described processing of the block diagram. Then, the CPU 102 causes an output unit 106 to output the processing result, a communication unit 108 to transmit the processing result, and the hard disk 105 to record the processing result, via the input/output interface 110, as necessary, for example.

Note that the input unit 107 is configured by a keyboard, a mouse, a microphone, and the like. Furthermore, the output unit 106 is configured by a liquid crystal display (LCD), a speaker, and the like.

Here, in the present specification, the processing performed by the computer in accordance with the program does not necessarily have to be performed in chronological order in accordance with the order described as the flowchart. In other words, the processing performed by the computer according to the program also includes processing executed in parallel or individually (for example, parallel processing or processing by an object).

Furthermore, the program may be processed by one computer (processor) or may be processed in a distributed manner by a plurality of computers. Moreover, the program may be transferred to a remote computer and executed.

Moreover, in the present specification, the term "system" means a group of a plurality of configuration elements (devices, modules (parts), and the like), and whether or not all the configuration elements are in the same housing is irrelevant. Therefore, a plurality of devices housed in separate housings and connected via a network, and one device that houses a plurality of modules in one housing are both systems.

Further, for example, the configuration described as one device (or processing unit) may be divided into and configured as a plurality of devices (or processing units). On the contrary, the configuration described as a plurality of devices (or processing units) may be collectively configured as one device (or processing unit). Furthermore, a configuration other than the above-described configuration may be added to the configuration of each device (or each processing unit). Moreover, a part of the configuration of a certain device (or processing unit) may be included in the configuration of another device (or another processing unit) as long as the configuration and operation of the system as a whole are substantially the same.

Further, for example, in the present technology, a configuration of cloud computing in which one function is shared and processed in cooperation by a plurality of devices via a network can be adopted.

Furthermore, for example, the above-described program can be executed by an arbitrary device. In that case, the device is only required to have necessary functions (functional blocks and the like) and obtain necessary information.

Further, for example, the steps described in the above-described flowcharts can be executed by one device or can be executed by a plurality of devices in a shared manner. Moreover, in the case where a plurality of processes is included in one step, the plurality of processes included in the one step can be executed by one device or can be shared and executed by a plurality of devices. In other words, the plurality of processes included in one step can be executed as processes of a plurality of steps. Conversely, the processing described as a plurality of steps can be collectively executed as one step.

Note that, in the program executed by the computer, the processing of the steps describing the program may be executed in chronological order according to the order described in the present specification, or may be individually executed in parallel or at necessary timing when a call is made, for example. That is, the processing of each step may be executed in an order different from the above-described order as long as no contradiction occurs. Moreover, the processing of the steps describing the program may be executed in parallel with the processing of another program, or may be executed in combination with the processing of another program.

Note that the plurality of present technologies described in the present specification can be implemented independently of one another as a single unit as long as there is no inconsistency. Of course, an arbitrary number of the present technologies can be implemented together. For example, part or whole of the present technology described in any of the embodiments can be implemented in combination with part or whole of the present technology described in another embodiment. Further, part or whole of the above-described arbitrary present technology can be implemented in combination with another technology not described above.

### <Application Example To Moving Bodies>

The technology according to the present disclosure (present technology) can be applied to various products. For example, the technology according to the present disclosure may be realized as a device mounted on any type of moving bodies including an automobile, an electric automobile, a hybrid electric automobile, a motorcycle, a bicycle, a personal mobility, an airplane, a drone, a ship, a robot, and the like.

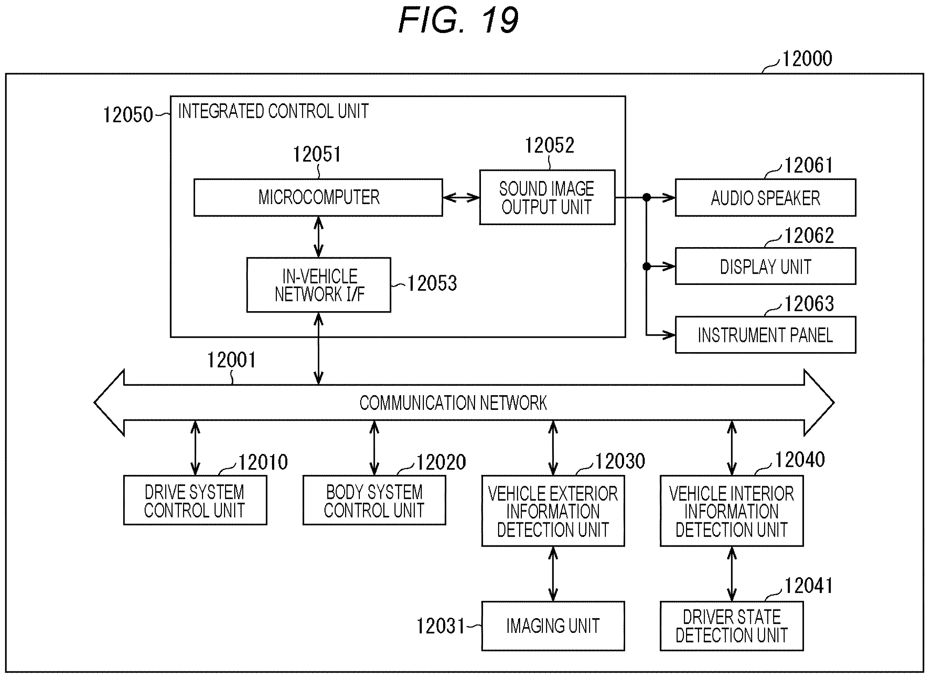

Fig. 19 is a block diagram illustrating a schematic configuration example of a vehicle control system as an example of a moving body control system to which the technology according to the present disclosure is applicable.

A vehicle control system 12000 includes a plurality of electronic control units connected through a communication network 12001. In the example illustrated in Fig. 19, the vehicle control system 12000 includes a drive system control unit 12010, a body system control unit 12020, a vehicle exterior information detection unit 12030, a vehicle interior information detection unit 12040, and an integrated control unit 12050. Furthermore, as functional configurations of the integrated control unit 12050, a microcomputer 12051, a sound image output unit 12052, and an in-vehicle network interface (I/F) 12053 are illustrated.

The drive system control unit 12010 controls operations of devices regarding a drive system of a vehicle according to various programs. For example, the drive system control unit 12010 functions as a control device of a drive force generation device for generating drive force of a vehicle, such as an internal combustion engine or a drive motor, a drive force transmission mechanism for transmitting drive force to wheels, a steering mechanism that adjusts a steering angle of a vehicle, a braking device that generates braking force of a vehicle, and the like.

The body system control unit 12020 controls operations of various devices equipped in a vehicle body according to various programs. For example, the body system control unit 12020 functions as a control device of a keyless entry system, a smart key system, an automatic window device, and various lamps such as head lamps, back lamps, brake lamps, turn signals, and fog lamps. In this case, radio waves transmitted from a mobile device substituted for a key or signals of various switches can be input to the body system control unit 12020. The body system control unit 12020 receives an input of the radio waves or the signals, and controls a door lock device, the automatic window device, the lamps, and the like of the vehicle.

The vehicle exterior information detection unit 12030 detects information outside the vehicle that mounts the vehicle control system 12000. For example, an imaging unit 12031 is connected to the vehicle exterior information detection unit 12030. The vehicle exterior information detection unit 12030 causes the imaging unit 12031 to capture an image outside the vehicle, and receives the captured image. The vehicle exterior information detection unit 12030 may perform object detection processing or distance detection processing of persons, vehicles, obstacles, signs, letters on a road surface, or the like on the basis of the received image.

The imaging unit 12031 is an optical sensor that receives light and outputs an electrical signal according to a reception amount of the light. The imaging unit 12031 can output the electrical signal as an image and can output the electrical signal as information of distance measurement. Furthermore, the light received by the imaging unit 12031 may be visible light or may be non-visible light such as infrared light.

The vehicle interior information detection unit 12040 detects information inside the vehicle. A driver state detection unit 12041 that detects a state of a driver is connected to the vehicle interior information detection unit 12040, for example. The driver state detection unit 12041 includes a camera that captures the driver, for example, and the vehicle interior information detection unit 12040 may calculate the degree of fatigue or the degree of concentration of the driver, or may determine whether or not the driver falls asleep on the basis of the detection information input from the driver state detection unit 12041.

The microcomputer 12051 calculates a control target value of the drive force generation device, the steering mechanism, or the braking device on the basis of the information outside and inside the vehicle acquired in the vehicle exterior information detection unit 12030 or the vehicle interior information detection unit 12040, and can output a control command to the drive system control unit 12010. For example, the microcomputer 12051 can perform cooperative control for the purpose of realization of an advanced driver assistance system (ADAS) function including collision avoidance or shock mitigation of the vehicle, following travel based on a vehicular gap, vehicle speed maintaining travel, collision warning of the vehicle, lane out warning of the vehicle, and the like.

Furthermore, the microcomputer 12051 controls the drive force generation device, the steering mechanism, the braking device, or the like on the basis of the information of a vicinity of the vehicle acquired in the vehicle exterior information detection unit 12030 or the vehicle interior information detection unit 12040 to perform cooperative control for the purpose of automatic drive of autonomous travel without depending on an operation of the driver or the like.

Furthermore, the microcomputer 12051 can output a control command to the body system control unit 12020 on the basis of the information outside the vehicle acquired in the vehicle exterior information detection unit 12030. For example, the microcomputer 12051 can perform cooperative control for the purpose of achievement of non-glare such as by controlling the head lamps according to the position of a leading vehicle or an oncoming vehicle detected in the vehicle exterior information detection unit 12030, and switching high beam light to low beam light.

The sound image output unit 12052 transmits an output signal of at least one of a sound or an image to an output device that can visually and aurally notify a passenger of the vehicle or an outside of the vehicle of information. In the example in Fig. 19, as the output device, an audio speaker 12061, a display unit 12062, and an instrument panel 12063 are exemplarily illustrated. The display unit 12062 may include, for example, at least one of an on-board display or a head-up display.

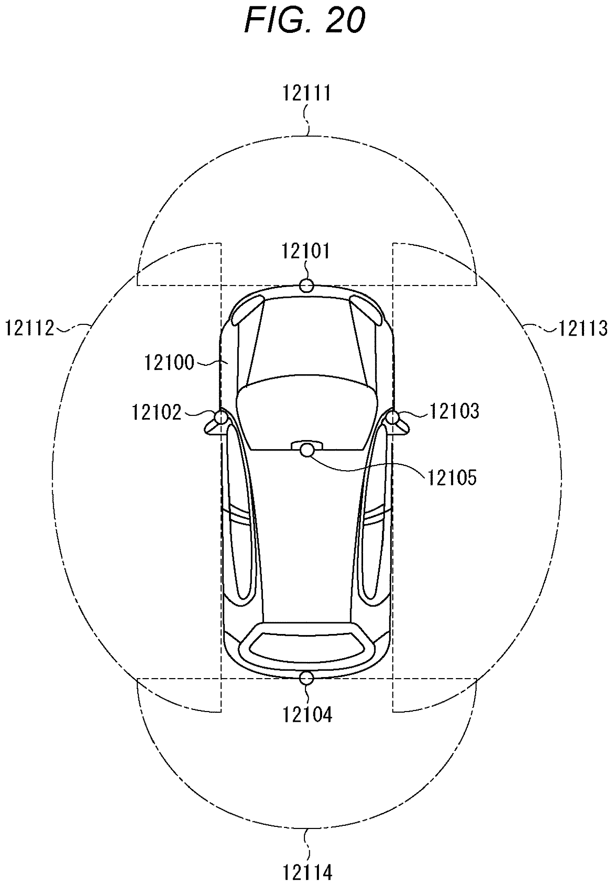

Fig. 20 is a diagram illustrating an example of an installation position of the imaging unit 12031.

In Fig. 20, a vehicle 12100 includes, as the imaging unit 12031, imaging units 12101, 12102, 12103, 12104, and 12105.

The imaging units 12101, 12102, 12103, 12104, and 12105 are provided at positions of a front nose, side mirrors, a rear bumper or a back door, an upper portion of a windshield, and the like in an interior of the vehicle 12100, for example. The imaging unit 12101 provided at the front nose and the imaging unit 12105 provided at an upper portion of the windshield in an interior of the vehicle mainly acquire images in front of the vehicle 12100. The imaging units 12102 and 12103 provided at the side mirrors mainly acquire images on sides of the vehicle 12100. The imaging unit 12104 provided at the rear bumper or the back door mainly acquires a rear image of the vehicle 12100. The front images acquired in the imaging units 12101 and 12105 are mainly used for detection of a leading vehicle, a pedestrian, an obstacle, a traffic light, a traffic sign, a lane, or the like.

Note that Fig. 20 illustrates an example of capture ranges of the imaging units 12101 to 12104. An imaging range 12111 indicates the imaging range of the imaging unit 12101 provided at the front nose, imaging ranges 12112 and 12113 respectively indicate the imaging ranges of the imaging units 12102 and 12103 provided at the side mirrors, and an imaging range 12114 indicates the imaging range of the imaging unit 12104 provided at the rear bumper or the back door. For example, a bird's-eye view image of the vehicle 12100 as viewed from above can be obtained by superimposing image data captured by the imaging units 12101 to 12104.

At least one of the imaging units 12101 to 12104 may have a function to acquire distance information. For example, at least one of the imaging units 12101 to 12104 may be a stereo camera including a plurality of imaging elements or may be an image element having pixels for phase difference detection.

For example, the microcomputer 12051 obtains distances to three-dimensional objects in the imaging ranges 12111 to 12114 and temporal change of the distances (relative speeds to the vehicle 12100) on the basis of the distance information obtained from the imaging units 12101 to 12104, thereby to particularly extract a three-dimensional object closest to the vehicle 12100 on a traveling road and traveling at a predetermined speed (for example, 0 km/h or more) in substantially the same direction as the vehicle 12100 as a leading vehicle. Moreover, the microcomputer 12051 can set an inter-vehicle distance to be secured from the leading vehicle in advance and perform automatic braking control (including following stop control) and automatic acceleration control (including following start control), and the like. In this way, the cooperative control for the purpose of automatic driving of autonomous travel without depending on an operation of the driver, and the like can be performed.

For example, the microcomputer 12051 classifies three-dimensional object data regarding three-dimensional objects into two-wheeled vehicles, ordinary cars, large vehicles, pedestrians, and other three-dimensional objects such as electric poles to be extracted, on the basis of the distance information obtained from the imaging units 12101 to 12104, and can use the data for automatic avoidance of obstacles. For example, the microcomputer 12051 discriminates obstacles around the vehicle 12100 into obstacles visually recognizable by the driver of the vehicle 12100 and obstacles visually unrecognizable by the driver. The microcomputer 12051 then determines a collision risk indicating a risk of collision with each of the obstacles, and can perform drive assist for collision avoidance by outputting warning to the driver through the audio speaker 12061 or the display unit 12062, and performing forced deceleration or avoidance steering through the drive system control unit 12010, in a case where the collision risk is a set value or more and there is a collision possibility.

At least one of the imaging units 12101 to 12104 may be an infrared camera that detects infrared light. For example, the microcomputer 12051 determines whether or not a pedestrian exists in the captured images of the imaging units 12101 to 12104, thereby to recognize the pedestrian. Such recognition of a pedestrian is performed by a process of extracting characteristic points in the captured images of the imaging units 12101 to 12104, as the infrared camera, for example, and by a process of performing pattern matching processing for the series of characteristic points indicating a contour of an object and determining whether or not the object is a pedestrian. When the microcomputer 12051 determines that a pedestrian exists in the captured images of the imaging units 12101 to 12104 and recognizes the pedestrian, the sound image output unit 12052 causes the display unit 12062 to superimpose and display a square contour line for emphasis on the recognized pedestrian. Furthermore, the sound image output unit 12052 may cause the display unit 12062 to display an icon or the like representing the pedestrian at a desired position.

An example of a vehicle control system to which the technology according to the present disclosure is applicable has been described. The technology according to the present disclosure is applicable to the imaging unit 12031, of the above-described configurations. By applying the technology according to the present disclosure to the measurement device 11, the distance to another vehicle can be measured in a shorter time than before, and safer automatic driving can be implemented.

### <Combination Example of Configuration>

Note that the present technology can also have the following configurations.
(1) A measurement device including:
   an emission timing signal generation unit configured to generate a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
   a count code output unit configured to output a count code indicating timing at which a pulse of reflected light that is the laser light reflected by a distance measurement target and returned is received according to the number of emissions in the distance measurement range time of one time; and
   a distance calculation unit configured to calculate a distance to the distance measurement target according to the specific count code among a plurality of the count codes.
(2) The measurement device according to (1), in which
   the emission timing signal generation unit equalizes an interval between pulses of the laser light emitted at two or more times of the number of emissions within the distance measurement range time of one time.
(3) The measurement device according to (1) or (2), in which
   the emission timing signal generation unit unequalizes an interval between pulses of the laser light emitted at two or more times of the number of emissions within the distance measurement range time of one time.
(4) The measurement device according to any one of (1) to (3), in which
   the emission timing signal generation unit changes an interval between pulses of the laser light for the each distance measurement range time of one time.
(5) The measurement device according to (4), in which
   the emission timing signal generation unit changes the interval between pulses of the laser light on the basis of a predetermined random number.
(6) The measurement device according to any one of (1) to (5), in which,
   regarding the pulse of the laser light emitted according to the number of emissions within the distance measurement range time of one time, the next pulse is emitted at timing before a reflected wave of the pulse emitted immediately before is received.
(7) The measurement device according to any one of (1) to (6), further including:
   a histogram generation unit in which the distance measurement range time is repeatedly performed according to a predetermined number of outputs, the histogram generation unit configured to generate a histogram of the plurality of count codes output from the count code output unit; and
   a filter processing unit configured to apply filter processing according to a transfer function obtained from the emission timing to the histogram generated by the histogram generation unit, in which
   the distance calculation unit calculates the distance to the distance measurement target using the count code indicating a peak in the histogram to which the filter processing has been applied by the filter processing unit.
(8) The measurement device according to (7), in which,
   in a case where an interval between pulses of the laser light is changed for the each distance measurement range time of one time,
   the filter processing unit obtains the transfer function obtained from the emission timing for each of the distance measurement range times and applies the filter processing, and then merges the histograms.
(9) The measurement device according to (8), in which
   the transfer function used by the filter processing unit is determined by machine learning.
(10) The measurement device according to (7), in which,
   in a case where the peak is not specified in the histogram to which the filter processing has been applied, the filter processing unit increases the number of emissions of the pulse of the laser light and causes the distance measurement range time to be repeated.
(11) The measurement device according to any one of (1) to (10), further including:
   a calculation unit configured to perform, for each of a plurality of the count codes output from the count code output unit, calculation to obtain a calculation result obtained by subtracting each of the emission timings for all the pulses emitted within the distance measurement range time of one time from the count code; and
   a histogram generation unit configured to generate a histogram of a plurality of the calculation results obtained by the calculation unit, in which
   the distance calculation unit calculates the distance to the distance measurement target using the calculation result indicating a peak in the histogram generated by the histogram generation unit.
(12) The measurement device according to any one of (1) to (11), further including:
   a plurality of the count code output units, in which
   each of the count code output units starts counting of the count code at timing according to the emission timing, and
   the distance calculation unit calculates the distance to the distance measurement target using the count code indicating a peak in a histogram generated using all the count cods output from the plurality of the count code output units.
(13) The measurement device according to any one of (1) to (12), further including:
   a plurality of light receiving elements configured to receive the reflected light that is the laser light reflected by the distance measurement target and returned.
(14) The measurement device according to (13), in which
   light reception of a plurality of the light receiving elements is disabled at timing when the pulse of the laser light is emitted in a configuration provided with the plurality of the light receiving elements, and
   a histogram of a count code indicating the timing when each of the light receiving elements is disabled is corrected on the basis of the emission timing.
(15) A measurement method including:
   by a measurement device,
   generating a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
   outputting a count code indicating timing at which a pulse of reflected light that is the laser light reflected by a distance measurement target and returned is received according to the number of emissions in the distance measurement range time of one time; and
   calculating a distance to the distance measurement target according to the specific count code among a plurality of the count codes.
(16) A program for causing a computer of a measurement device to execute measurement processing including:
   generating a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
   outputting a count code indicating timing at which a pulse of reflected light that is the laser light reflected by a distance measurement target and returned is received according to the number of emissions in the distance measurement range time of one time; and
   calculating a distance to the distance measurement target according to the specific count code among a plurality of the count codes.

Note that the present embodiments are not limited to the above-described embodiments, and various modifications can be made without departing from the gist of the present disclosure. Furthermore, the effects described in the present specification are merely examples and are not limited, and other effects may be exhibited.

### REFERENCE SIGNS LIST

- 11: Measurement device
- 12: Emission timing signal generation unit
- 13: Laser driver
- 14: Light receiving element
- 15: TDC
- 16: Histogram generation unit
- 17: Filter processing unit
- 18: Distance calculation unit
- 19: Calculation unit
- 21: Counter
- 22: Latch
- 31: Laser
- 32: Diffraction grating
- 33: Optical switch

## Claims

1. A measurement device comprising:
an emission timing signal generation unit configured to generate a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
a count code output unit configured to output a count code indicating timing at which a pulse of reflected light that is the laser light reflected by a distance measurement target and returned is received according to the number of emissions in the distance measurement range time of one time; and
a distance calculation unit configured to calculate a distance to the distance measurement target according to the specific count code among a plurality of the count codes.

2. The measurement device according to claim 1, wherein
the emission timing signal generation unit equalizes an interval between pulses of the laser light emitted at two or more times of the number of emissions within the distance measurement range time of one time.

3. The measurement device according to claim 1, wherein
the emission timing signal generation unit unequalizes an interval between pulses of the laser light emitted at two or more times of the number of emissions within the distance measurement range time of one time.

4. The measurement device according to claim 1, wherein
the emission timing signal generation unit changes an interval between pulses of the laser light for the each distance measurement range time of one time.

5. The measurement device according to claim 4, wherein
the emission timing signal generation unit changes the interval between pulses of the laser light on a basis of a predetermined random number.

6. The measurement device according to claim 1, wherein,
regarding the pulse of the laser light emitted according to the number of emissions within the distance measurement range time of one time, the next pulse is emitted at timing before a reflected wave of the pulse emitted immediately before is received.

7. The measurement device according to claim 1, further comprising:
a histogram generation unit in which the distance measurement range time is repeatedly performed according to a predetermined number of outputs, the histogram generation unit configured to generate a histogram of the plurality of count codes output from the count code output unit; and
a filter processing unit configured to apply filter processing according to a transfer function obtained from the emission timing to the histogram generated by the histogram generation unit, wherein
the distance calculation unit calculates the distance to the distance measurement target using the count code indicating a peak in the histogram to which the filter processing has been applied by the filter processing unit.

8. The measurement device according to claim 7, wherein,
in a case where an interval between pulses of the laser light is changed for the each distance measurement range time of one time,
the filter processing unit obtains the transfer function obtained from the emission timing for each of the distance measurement range times and applies the filter processing, and then merges the histograms.

9. The measurement device according to claim 8, wherein
the transfer function used by the filter processing unit is determined by machine learning.

10. The measurement device according to claim 7, wherein,
in a case where the peak is not specified in the histogram to which the filter processing has been applied, the filter processing unit increases the number of emissions of the pulse of the laser light and causes the distance measurement range time to be repeated.

11. The measurement device according to claim 1, further comprising:
a calculation unit configured to perform, for each of a plurality of the count codes output from the count code output unit, calculation to obtain a calculation result obtained by subtracting each of the emission timings for all the pulses emitted within the distance measurement range time of one time from the count code; and
a histogram generation unit configured to generate a histogram of a plurality of the calculation results obtained by the calculation unit, wherein
the distance calculation unit calculates the distance to the distance measurement target using the calculation result indicating a peak in the histogram generated by the histogram generation unit.

12. The measurement device according to claim 1, further comprising:
a plurality of the count code output units, wherein
each of the count code output units starts counting of the count code at timing according to the emission timing, and
the distance calculation unit calculates the distance to the distance measurement target using the count code indicating a peak in a histogram generated using all the count cods output from the plurality of the count code output units.

13. The measurement device according to claim 1, further comprising:
a plurality of light receiving elements configured to receive the reflected light that is the laser light reflected by the distance measurement target and returned.

14. The measurement device according to claim 13, wherein
light reception of a plurality of the light receiving elements is disabled at timing when the pulse of the laser light is emitted in a configuration provided with the plurality of the light receiving elements, and
a histogram of a count code indicating the timing when each of the light receiving elements is disabled is corrected on a basis of the emission timing.

15. A measurement method comprising:
by a measurement device,
generating a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
outputting a count code indicating timing at which a pulse of reflected light that is the laser light reflected by a distance measurement target and returned is received according to the number of emissions in the distance measurement range time of one time; and
calculating a distance to the distance measurement target according to the specific count code among a plurality of the count codes.

16. A program for causing a computer of a measurement device to execute measurement processing comprising:
generating a signal for giving an instruction on emission timing to emit a pulse of laser light in order to output the laser light having a number of emissions of pulses of two or more times within a distance measurement range time of one time by setting, as the distance measurement range time, a width of a flight time in which light reciprocates between the measurement device and a distance measurement range representing a fixed distance width including a distance to be measured;
outputting a count code indicating timing at which a pulse of reflected light that is the laser light reflected by a distance measurement target and returned is received according to the number of emissions in the distance measurement range time of one time; and
calculating a distance to the distance measurement target according to the specific count code among a plurality of the count codes.
